# EUROPEAN PATENT APPLICATION

(11) **EP 4 786 377 A1**
(43) Date of publication of application: **05.08.2026**
(21) Application number: 25155885.4
(22) Date of filing: 04.02.2025
(51) Int. Cl.: B65G 1/137

(54) **A GOODS HANDLING STATION**

(71) Applicant: AutoStore Technology AS, 5578 Nedre Vats (NO)
(72) Inventor: AUSTRHEIM, Trond, 5578 Nedre Vats (NO); SZEWCZYK, Rafal, 5578 Nedre Vats (NO); MYRBAKKEN, Joakim, 5578 Nedre Vats (NO)
(74) Representative: Kilburn & Strode LLP

(57) **Abstract**

The disclosure relates to a goods handling station for transferring goods to and/or from a bin of an automated storage and retrieval system, the goods handling station comprising: a bin receiving area configured to receive a bin of the automated storage and retrieval system; a first goods manipulator at the bin receiving area for directly supporting and unloading goods from the bin and/or loading goods into the bin; a goods conveyor comprising a transfer position arranged adjacent to the bin receiving area, the goods conveyor configured to move goods in a conveying direction towards or away from the transfer position; and a second goods manipulator configured to carry goods between the transfer position of the goods conveyor and the first goods manipulator.

## Description

### TECHNICAL FIELD

The disclosure relates to a goods handling station. More particularly, it relates to a goods handling station for transferring goods to and/or from a bin of an automated storage and retrieval system, and an associated method.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

In typical automated storage and retrieval systems, the containers delivered to the ports or stations at the periphery of the grid are manually processed by human or robot pickers before the containers are returned to the grid or carried elsewhere for additional picking or restocking. Manual processing of the containers typically involves picking goods up from the container and placing them on a trolley, pallet, conveyor, or other logistical means for further processing of those goods. Alternatively, the manual processing may involve picking goods up from a trolley, pallet, conveyor, or other logistical means and placing the goods in the container. The speed at which goods can be retrieved from the grid or stocked into the grid is therefore limited by the picker's (human or robotic) movement speed.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5a shows a perspective view of a goods handling station;
Fig. 5b shows a top view of the goods handling station of Fig. 5a;
Figs. 6a and 6b show an end view of the goods handling station of Fig. 5a;
Figs. 7a and 7b show a side view of a first goods manipulator;
Fig. 8 is a perspective view of a second goods manipulator;
Fig. 9 is a perspective view of another second goods manipulator;
Fig. 10 is a perspective view of a bin of an automated storage and retrieval system; and
Fig. 11 is a flow chart showing a method of transferring goods to and/or from a bin of an automated storage and retrieval system.

### DETAILED DESCRIPTION

In overview, the disclosure relates to a goods handling station that is capable of transferring goods to and/or from a bin (i.e., a container) of an automated storage retrieval system. The goods handing station is capable of directly unloading (e.g., removing) goods from the bin (e.g., for picking goods) and/or loading (e.g., placing) goods into the bin (e.g., for packing the bin, such as for restocking). This removes the need to use bins which have moveable bases or inserts or the like. Bins with a unitary or substantially unitary construction can be used, which are more robust and simpler to manufacture.

Described herein is a goods handling station for transferring goods to and/or from a bin of an automated storage and retrieval system, the goods handling station comprising: a bin receiving area configured to receive a bin of the automated storage and retrieval system; a first goods manipulator at the bin receiving area for directly supporting and unloading goods from the bin and/or loading goods into the bin; a goods conveyor comprising a transfer position arranged adjacent to the bin receiving area, the goods conveyor configured to move goods in a conveying direction towards or away from the transfer position; and a second goods manipulator configured to carry goods between the transfer position of the goods conveyor and the first goods manipulator. The first goods manipulator is able to directly support and load or unload a bin, and so does not required a bin insert or a moveable base of a bin in order to load or unload goods. The second goods manipulator alone supports (i.e., carries) the goods to transport them between the transfer position of the goods conveyor and the first goods manipulator, and does not carry a bin insert or the like, and does not push, pull or otherwise slide goods between the first goods manipulator and the transfer position. The bin receiving area may receive a bin from a container-handling vehicle, for example, and the bin may be designated for the stocking (i.e., loading) of goods for storage in the storage grid, or may contain goods that are designated for retrieval from the storage grid, for example for the purposes of order fulfilment. Carrying goods between the transfer position of the goods conveyor and the first goods manipulator in this way is gentler than existing arrangements, and so more suitable for some goods (e.g., fragile goods, or goods which are flexible/bendable or otherwise need to be handled delicately such as clothing or the like) than other means of moving goods. In addition, the goods handling station has a simple and efficient design providing high throughput of goods.

The goods conveyor may be arranged such that a transfer position of the goods conveyor is adjacent to the bin receiving area such that goods can be transferred directly between the transfer position of the goods conveyor and the first goods manipulator at the bin receiving area. The goods conveyor is further arranged to be able to transport goods towards and/or away from the transfer position in a conveying direction. In some examples, there may be multiple goods conveyors, for example arranged on different sides of a transfer area. For example a first goods conveyor may be used to convey goods to a transfer position, and a second goods conveyor may be used to transfer goods away from a transfer position. Alternatively, the first and second goods conveyors may each be used to transport goods towards and/or way from the transfer position. Any suitable number and utilisation of goods conveyors may be contemplated.

Optionally, the second goods manipulator may comprise a plurality of laterally spaced fingers for carrying goods; and a positioning mechanism for moving the platform between the transfer position of the goods conveyor and the first goods manipulator. For example, the plurality of laterally spaced fingers can be considered as providing a platform for carrying goods.

Optionally, each of the laterally spaced fingers may comprise a support portion for carrying goods; and a connecting portion for connecting the finger to the positioning mechanism, wherein the support portion is connected at an angle to the connecting portion. For example, the angle may be substantially a right-angle, such that the support portion is substantially perpendicular to the connecting portion. In this way, the support portion is vertically offset from the connecting portion. For example, each finger may be considered as generally bent or curved to form a support portion and a connecting portion. For example, each finger may have be L-shaped, U-shaped, T-shaped or any other suitable shape. Such an arrangement allows the positioning mechanism to be arranged to underlie or overlie (e.g., be arranged to be underneath or above) the transfer position and/or the bin receiving position, allowing the provision of a compact goods handling station. In other examples, the laterally spaced fingers maybe substantially linear, and the positioning mechanism may be offset from the transfer position and/or the bin receiving position.

Optionally, the positioning mechanism may comprise a lifting mechanism for moving the platform along a first direction; and a carriage for moving the lifting mechanism along a second direction, the second direction being perpendicular to the first direction. The second goods manipulator thereby provides a mechanically simple and efficient (e.g., high throughput) solution for carry goods between the transfer position of the goods conveyor and the first goods manipulator. By mechanically simple, it will be appreciated that the system is easy and cheap to construct and maintain. For example, the carriage may be moveable along one or more rails. In one example, the carriage may be suspended from a gantry.

Optionally, the first goods manipulator may comprise a plurality of upstanding support elements arranged to protrude into the bin at the bin receiving area and directly support goods thereon, wherein the support elements are arranged so as to interpose the laterally spaced fingers of the second goods manipulator when the platform is positioned at the goods separator. In this way, the second goods manipulator can efficiently (e.g., at a high speed for increased throughput) lift goods from the first goods manipulator or deposit goods onto the first goods manipulator.

For example, the plurality of support elements may be arranged in an array, wherein the array of support elements is configured to be substantially coextensive with a bin of the automated storage and retrieval system. That is, the support elements may be generally evenly spread across the same extent as the bin, so that the goods are well-supported by the support elements however and wherever they are placed in the bin.

Optionally, the first goods manipulator may further comprise a bin support configured to receive a bin of the automated storage and retrieval system wherein the bin support is moveable relative to the upstanding support elements. In an example, the bin support is moveable between a raised position and a lowered positioned, wherein in the lowered position an upper end of the elongate support elements are higher than a sidewall of the bin, allowing the second goods manipulator to easily lift goods from the support elements or place goods on the support elements. It will be appreciated that in alternative examples, the upstanding support elements may be moveable relative to the bin support. In an example, a robotic container-handling vehicle may be used to raise and lower a bin relative to the support elements of the first goods manipulator.

Optionally, the goods conveyor may comprise a plurality of rollers at the transfer position, wherein the plurality of rollers are arranged to interpose the laterally spaced fingers of the second goods manipulator when the platform is positioned at the transfer position. In this way, the second goods manipulator can easily lift goods from the transfer position or place goods at the transfer position. It will be appreciated that in alternative examples, conveyor belts may be similarly used and arranged to interpose the laterally spaced fingers. For example, rollers may be utilised in arrangements where the second goods manipulator is arranged such that the plurality of laterally spaced fingers are perpendicular to the transfer direction of the goods conveyor. Conveyor belts may be utilised in arrangements where the second goods manipulator is arranged such that the plurality of laterally spaced fingers are parallel to the transfer direction of the goods conveyor.

Also described herein is a bin of an automated storage and retrieval system the bin suitable for use with a goods handling station as described herein, wherein the bin comprises: a base for receiving goods thereupon; an upstanding sidewall about the periphery of the base; and a plurality of apertures through the base, each aperture configured to receive an upstanding support element of a first goods manipulator therethrough. That is, the bin does not comprise a moveable base or an insert upon which goods are received. It will be appreciated that the sidewall is unitary or substantially unitary with the base - for example, they may be formed as one part or may be manufactured as two or more parts and joined together. The bin may thereby facilitate operation of an improved goods handling station as described herein. Utilising a bin according to this design reduces the risk of errors or faults occurring due to bases or inserts which can become separated from bins. In addition, by being provided with apertures in the base which directly receives goods and having no insert or moveable base upon which goods are received, fire safety is improved as water is able to enter the bin through the base and more effectively wet the contents of the bin.

Also described herein is a method of transferring goods to and/or from a bin of an automated storage and retrieval system using a goods handling station as described herein. For example, the method may be performed by a controller of the goods handling station and/or of the automated storage and retrieval system. The method comprises steps of: receiving, at the bin receiving area, a bin of the automated storage and retrieval system; conveying, by the goods conveyor, goods towards or away from the transfer position in a conveying direction; carrying, by the second goods manipulator, goods between the first goods conveyor and the first goods manipulator; and, either: unloading, by the first goods manipulator, goods from the bin; or loading, by the first goods manipulator, goods into the bin. It will be appreciated that the order of these steps is dependent on whether the goods handling station is being used for loading or unloading a bin.

Optionally, the carrying, by the second goods manipulator, goods between the first goods conveyor and the first goods manipulator may comprise carrying, by the second goods manipulator, goods from the goods conveyor to the first goods manipulator subsequent to the conveying of the goods to the transfer position by the goods conveyor. For example, this may be in a loading operation for loading goods into a bin for storage in the grid of the automated storage and retrieval system (e.g., for stocking or restocking).

Optionally, the carrying, by the second goods manipulator, goods between the first goods conveyor and the first goods manipulator may comprise carrying, by the second goods manipulator, goods from the first goods manipulator to the goods conveyor prior to the conveying of the goods away from the transfer position by the goods conveyor. For example, this may be in an unloading operation in an unloading operation for unloading goods from a bin (e.g., for order picking).

Optionally, the either of: unloading, by the first goods manipulator, goods from the bin, or loading, by the first goods manipulator, goods into the bin, may comprise either moving the bin relative to a plurality of upstanding support elements of the first goods manipulator, or moving a plurality of upstanding support elements of the first goods manipulator relative to the bin.

Optionally, receiving, at the bin receiving area, a bin of the automated storage and retrieval system may comprise receiving the bin from a container-handling vehicle of an automated storage and retrieval system.

Also described herein is a computer-readable medium comprising instructions which, when executed by a processor of an item handling device, cause the device to perform a method of transferring goods to and/or from a bin of an automated storage and retrieval system using a goods handling station as described herein.

### Automated storage and retrieval system overview

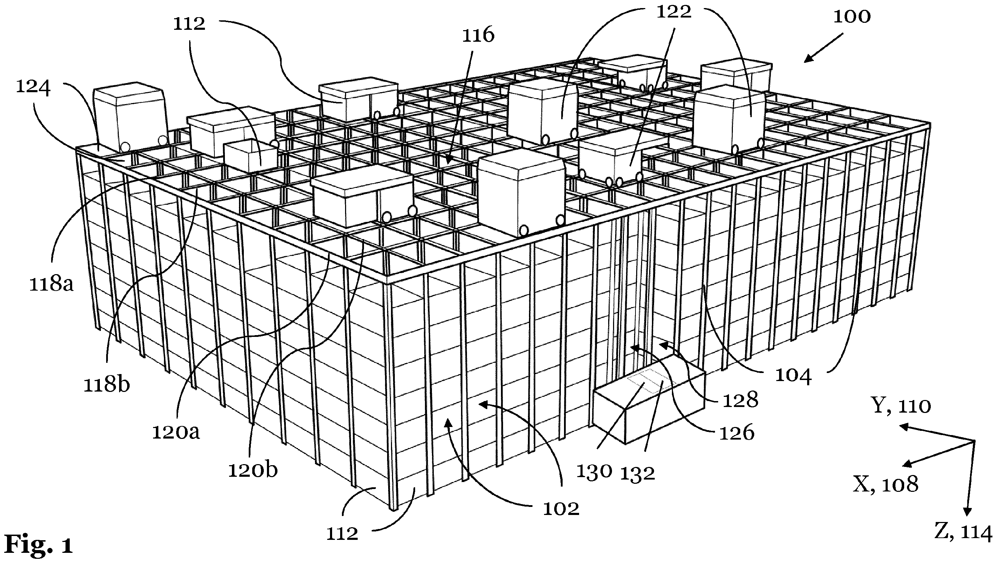

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

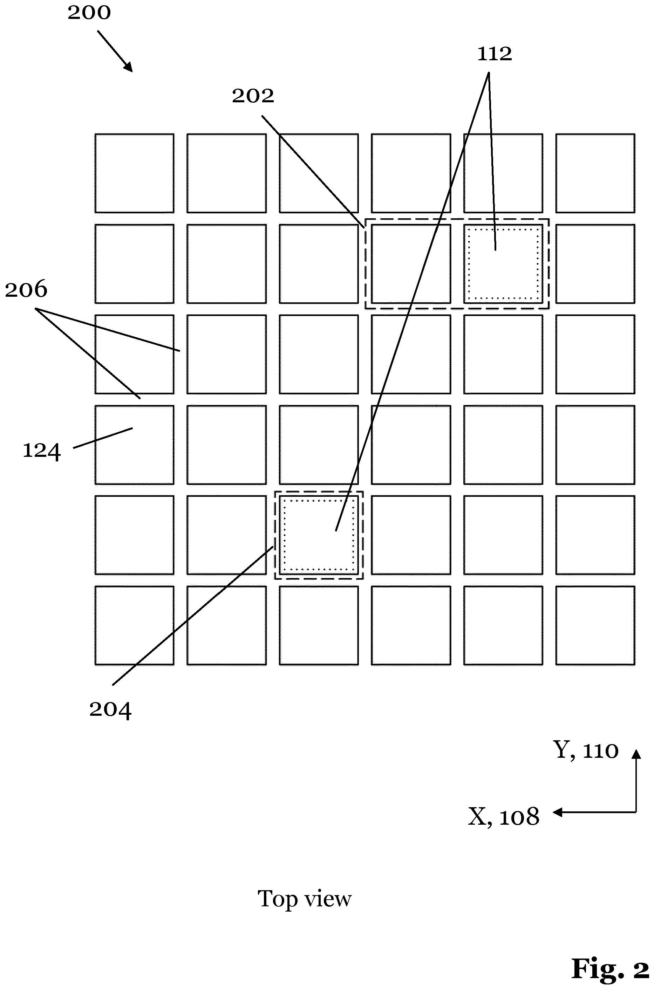

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

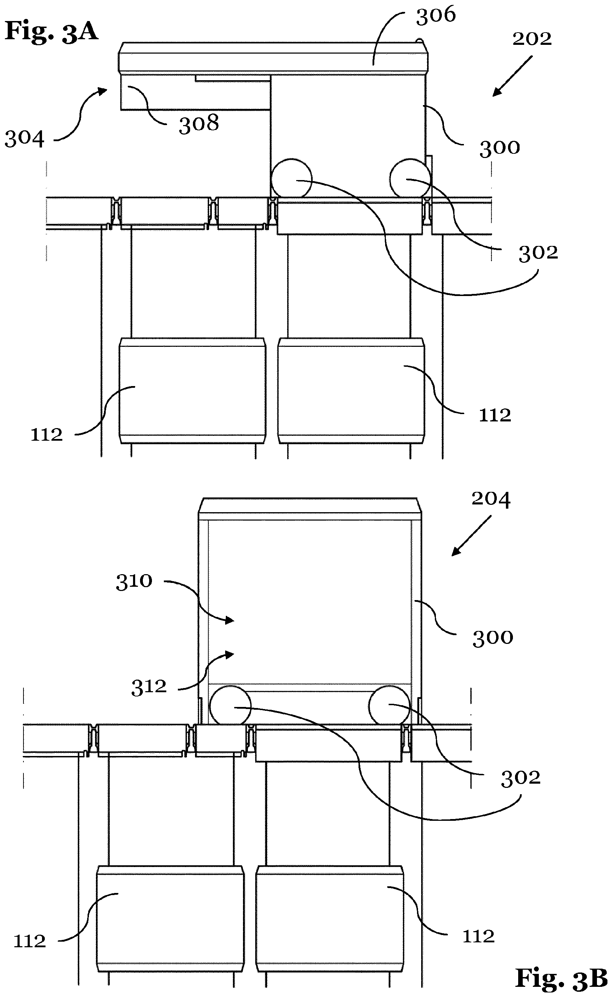

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

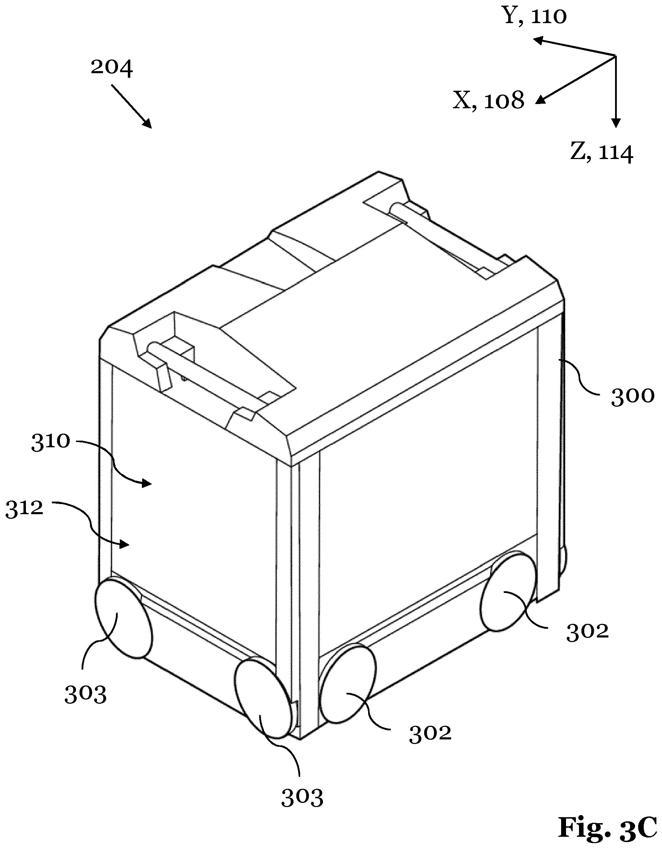

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

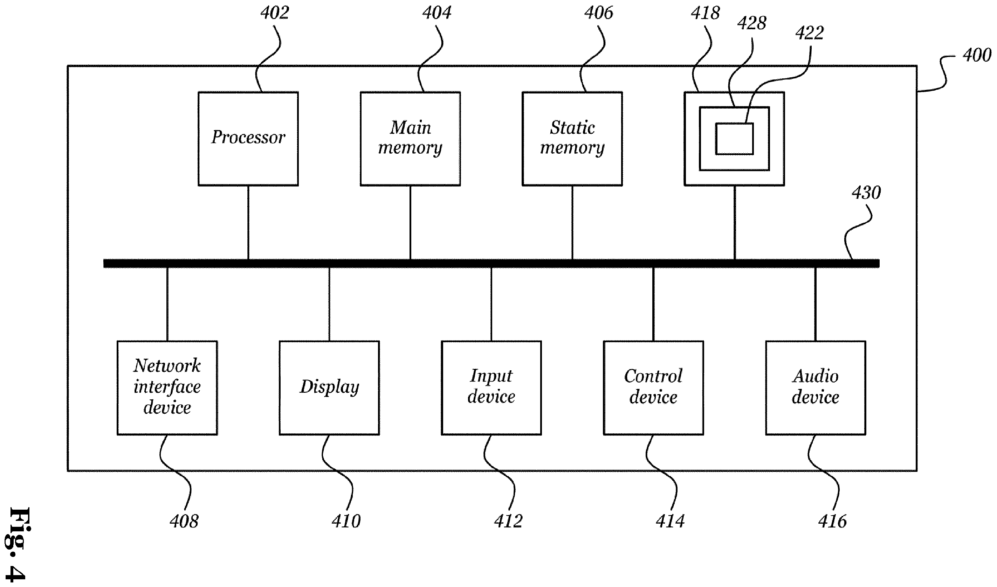

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term `computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit ₄₁₀ (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a `digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Goods handling station

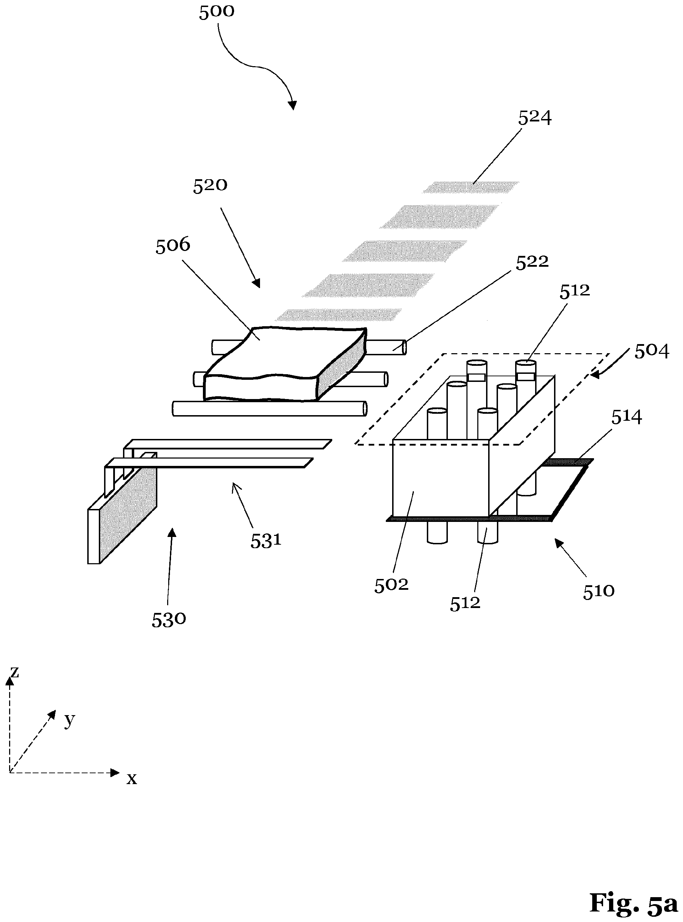

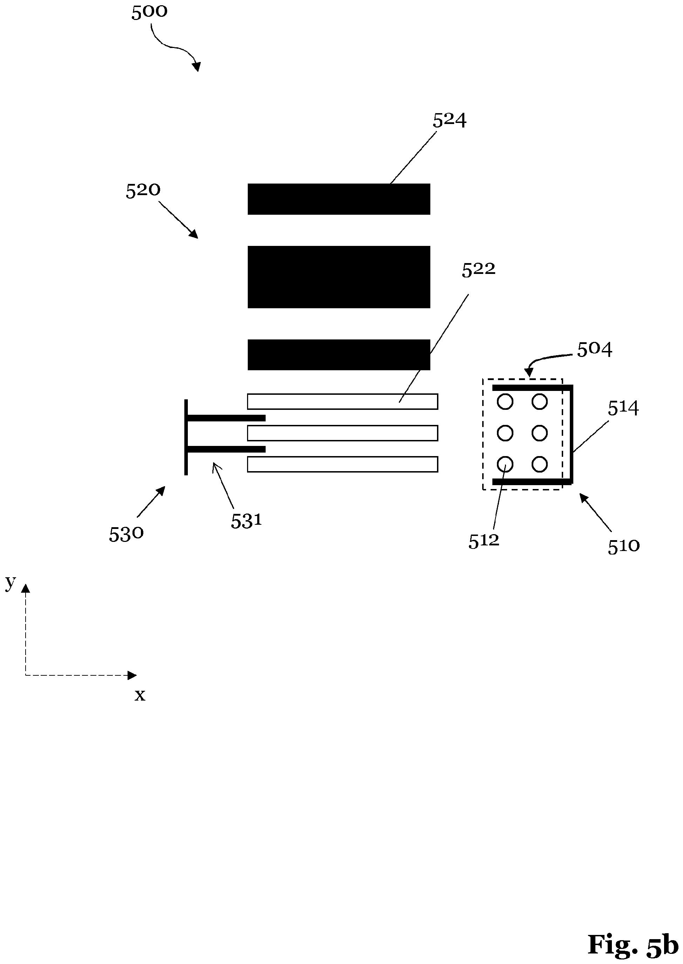

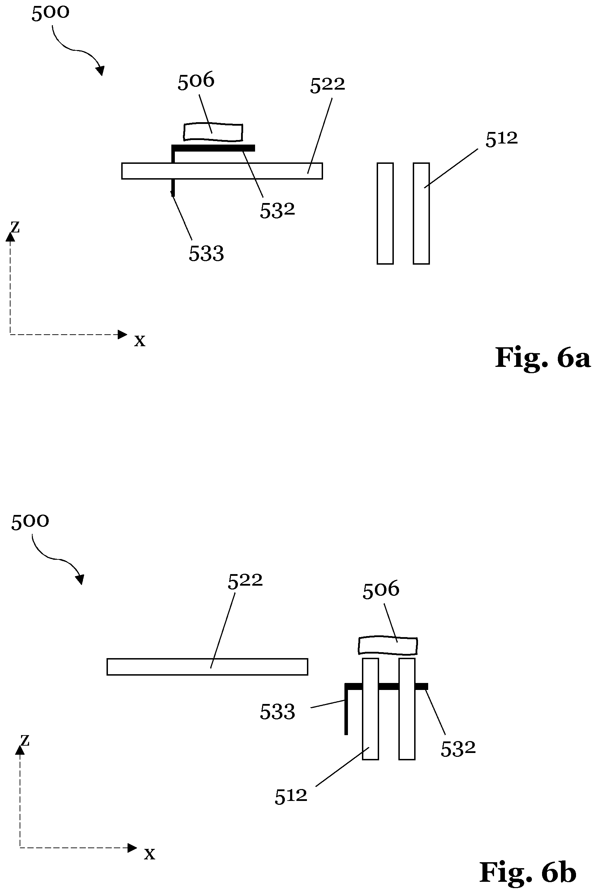

Fig. 5a shows a perspective view and Fig. 5b shows a top view of a goods handling station 500 in an example implementation. Figs. 6a and 6b show end views of the goods handling station 500. The goods handling station 500 is used for transferring goods 506 to and/or from a bin 502 of an automated storage and retrieval system, such as the system described above with respect to Fig 1.

The goods handling station 500 comprises a bin receiving area 504 to receive a bin 502 of the automated storage and retrieval system. A first goods manipulator 510 is positioned at the bin receiving area 504 for directly supporting and unloading goods 506 from the bin 502 and/or loading goods 506 into the bin 502 in a manner described in more detail below. A goods conveyor 520 comprising a transfer position is arranged adjacent to the bin receiving area 504, and is configured to move goods 506 in a conveying direction (in this example, the conveying direction is a Y-direction) towards and/or away from the transfer position. A second goods manipulator 530 is configured to carry goods 506 between the transfer position of the goods conveyor 520 and the first goods manipulator 510. In this example, the bin receiving area 504 and the first goods manipulator 510 are beside the goods conveyor 520 in the X-direction. However, in other examples they may be located at an end of the goods conveyor, e.g. beside the goods conveyor 520 in the Y-direction, with corresponding adjustments to the operation of the second goods manipulator 530.

The first goods manipulator 510 comprises a plurality of upstanding support elements 512 which, as shown in Fig. 5a, are arranged to protrude into the bin 502 at the bin receiving area 504 and directly support goods thereon. In this example, there are six upstanding support elements 512, wherein each element 512 is substantially cylindrical. However, it will be appreciated that any suitable number of support elements maybe provided in other examples, and the elements may have any suitable cross-sectional shape (e.g., square or rectangular). The six upstanding support elements 512 are arranged in an array having three rows and two columns of support elements 512, wherein the array is substantially coextensive with the bin 502 to ensure that goods 506 of any size may be supported by at least one support element 512 wherever the goods 510 are actually positioned within the bin 502. In the array, the support elements 512 are laterally spaced from one another, as explained in more detail below.

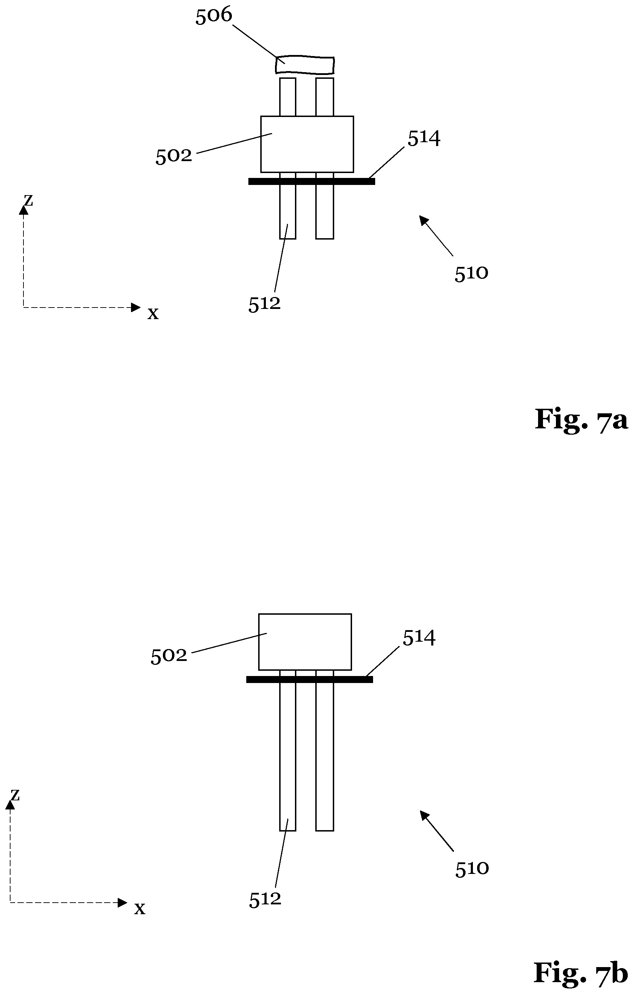

To unload and/or load goods 506 into the bin, the first goods manipulator 510 comprises a bin support 514 which is configured to receive a bin 502 and raise and lower the bin 502 (i.e., move the bin along the Z-direction) relative to the support elements 512. Operation of the bin support 514 is described in more detail below with respect to Figs. 7a and 7b. Of course, in other implementations, the bin 502 may be held static, and the first goods manipulator 510 may comprise a suitable mechanism or means for raising and lowering the support elements 512 relative to the bin 502 in the Z-direction.

The goods conveyor 520 comprises a plurality of rollers 522 at the transfer position, and a conveyor belt 524 arranged to receive goods 506 from, or deposit goods 506 onto, the rollers 522 as well as to convey goods 506 in the conveying direction towards or away from the transfer position. The rollers 522 are laterally spaced from one another, as explained in more detail below. The rollers 522 are powered so as to move goods 506 onto, or receive goods 506 from, the conveyor belt 524. In other examples, the rollers 522 may be replaced with smaller conveyor belts or the like.

The second goods manipulator 530 comprises a plurality of laterally spaced fingers 531 for carrying goods 506. The fingers 531 thereby provide a platform for carrying goods. In this example, two fingers 531 are shown but it will be appreciated that any suitable number may be utilised in other examples. The laterally spaced fingers 531 are moveable by being mounted on a positioning mechanism which is described in more detail below, such that first goods manipulator 530 can carry goods 506 between the transfer position of the goods conveyor 520 and the first goods manipulator 510.

As will be appreciated from Fig. 5b, the rollers 522 of the goods conveyor 520 are configured so as to interpose the laterally spaced fingers 532 of the second goods manipulator 530 when the platform is positioned at the transfer position. In this way, the laterally spaced fingers 531 are able to be moved between the rollers 522 in order to place goods at the transfer position, or to pick up goods at the transfer position. For example, when placing goods (e.g., goods 506) at the transfer position, the second goods manipulator 530 carries the goods on the fingers 531 to the transfer position, and then the platform is lowered such that the fingers 531 interpose and pass between the rollers 522 to transfer the goods from the platform onto the rollers 522. Similarly, when goods are supported by the rollers 522, the platform can be raised from beneath the rollers 522 such that the fingers interpose and pass between the rollers 522 to transfer the goods from the rollers 522 to the fingers 531 to be carried by the platform. Such a way of carrying and transferring goods is particularly suitable for fragile or delicate goods.

In a similar manner, the upstanding supports elements 512 are spaced apart from one another so as to interpose the laterally spaced fingers 531 of the second goods manipulator 530 when the platform is positioned at the first goods manipulator 510. In this way, the laterally spaced fingers 531 are able to be moved between the support members 512 in order to place goods at the first goods manipulator 510, or to pick up goods from the first goods manipulator 510. For example, when placing goods (e.g., goods 506) at the first goods manipulator 510, the second goods manipulator 530 carries the goods on the fingers 531 to the first goods manipulator 510, and then the platform is lowered such that the fingers 531 interpose and pass between the support members 512 to transfer the goods from the platform onto the support members 512. Similarly, when goods are supported by the support members 512, the platform can be raised from beneath the support members 512 such that the fingers 531 interpose and pass between the support members 512 to transfer the goods from the support members 512 to the fingers 531 to be carried by the platform. Such a way of carrying and transferring goods is particularly suitable for fragile or delicate goods.

Figs. 6a and 6b show further side views of the goods handling station 500, with the second goods manipulator 530 in different positions. It will be appreciated from Figs. 6a and 6b that the laterally spaced fingers 531 of the second goods manipulator 530 are provided in an upturned L-shape. In particular, each finger 531 comprises a support portion 532 for carrying goods and a connecting portion 533 for connecting the finger to a positioning mechanism. The support portion 532 is connected at an angle (here, 90°) to the connecting portion 533 such that the support portion 532 is vertically offset from the connecting portion 533. This allows the positioning mechanism to underlie the transfer position in this example, providing a compact goods handling station.

In Fig. 6a the second goods manipulator 530 is at the transfer position of the goods conveyor 520. The upturned L-shape of the laterally spaced fingers 531 allows the platform to be easily raised above the level of the rollers 522 in order to carry goods between the transfer position and the first goods manipulator 510. In Fig. 6b the second goods manipulator 530 is at the first goods manipulator 510, with the laterally spaced fingers 531 interposed between the support elements 512.

In other examples, other shapes of the fingers 531 may be considered to allow the fingers 531 to rise between the rollers 522 and the support elements 512 in this way. For example, the fingers may have a T-shape, an upturned U-shape, or the like, wherein the surface of the platform is vertically separated from a lifting mechanism of a positioning mechanism as described below.

Figs. 7a and 7b show a side view of the first goods manipulator 510, with the bin support 514 in different positions.

In Fig. 7a, the bin support 514 is in a lowered position, wherein upper ends of the elongate support elements 512 are higher than a sidewall of the bin 502, thereby allowing the second goods manipulator 530 to access the goods 506 (e.g., to place the goods 506 on the support elements 512 or to remove the goods 506 from the support elements 512). In Fig. 7b, the bin support 514 is in a raised position, wherein the goods 506 are enclosed by the sidewall of the bin 502. The bin support 514 is moveable between the raised and lowered positions such that the first goods manipulator 510 can thereby unload goods 506 from the bin 502 (e.g., as shown in Fig. 7a where the goods 506 are not enclosed by the bin 502) and/or load goods into the bin 502 (e.g., as shown in Fig. 7b where the goods 506 are enclosed by the bin 502).

When the bin support 514 is in the raised position, the bin 502 may be lowered onto or lifted form the bin support 514 by a container-handling vehicle of the automated storage and retrieval system.

### Second goods manipulator

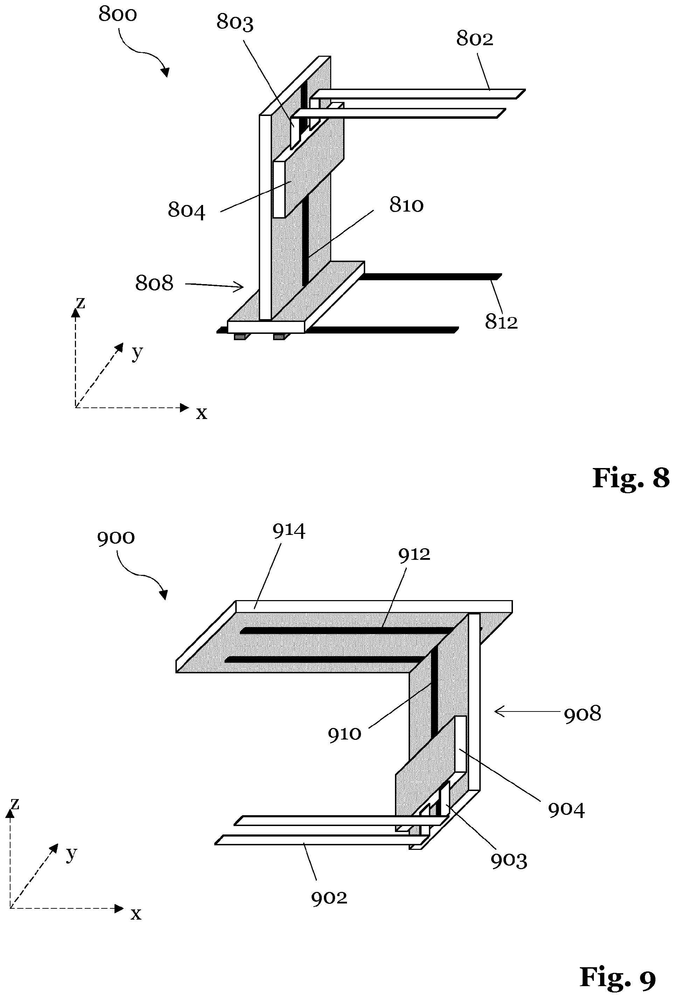

Fig. 8 shows a perspective view of a second goods manipulator 800 that maybe used in a goods handling station. For example, the second goods manipulator may be used in a goods handling station 500 as described above with respect to Figs. 5-6.

The second goods manipulator 800 a plurality of laterally spaced fingers for carrying goods. Each of the fingers are provided generally in the form of an upturned L-shape, having a support portion 802 for carrying goods and a connecting portion 803 for connecting the finger to a lifting mechanism 804.

To move the fingers between the transfer position of a goods conveyor and a first goods manipulator, the second goods manipulator 800 comprises a positioning mechanism. The positioning mechanism is configured to move in two directions (that is, along two axes). In particular, in the Z-direction (or Z-axis) and the X-direction (or X-axis) as shown. A lifting mechanism 804 is connected to the laterally spaced fingers , and can raise and lower the figners in the Z-direction by being moveably mounted to a carriage 808 via a first rail 810. The carriage 808 is itself moveable in the X-direction, thereby moving the lifting mechanism 804 in that direction, by being moveable mounted on second rails 812. The second rails 812 may be floor-mounted for example, or may be mounted on a moveable frame or apparatus which may be connected or connectable to other parts of the goods handling station. In a goods handling station, the second rails 812 generally extend between the transfer position and the first goods manipulator to allow the platform to be used to carry goods therebetween.

Drive mechanisms for moving the lifting mechanism 804 along the first rail 810 and for moving the carriage 808 along the second rails 812 are not shown, but can include any suitable mechanism such as a pulley or belt mechanism, or direct drive motors, or the like.

Fig. 9 shows a perspective view of another example of a second goods manipulator 900 that may be used in a goods handling station. For example, the second goods manipulator For example, the second goods manipulator may be used in a goods handling station 500 as described above with respect to Figs. 5-6.

The second goods manipulator 900 comprises a plurality of laterally spaced fingers for carrying. Each of the fingers are provided generally in the form of an L-shape, having a support portion 902 for carrying goods and a connecting portion 903 for connecting the fingers to a lifting mechanism 904.

To move the plurality of laterally spaced fingers between the transfer position of a goods conveyor and a first goods manipulator, the second goods manipulator 900 further comprises a positioning mechanism. The positioning mechanism is configured to move in two directions (that is, along two axes). In particular, in the Z-direction (or Z-axis) and the X-direction (or X-axis) as shown. A lifting mechanism 904 is connected to the laterally spaced fingers, and can raise and lower the laterally spaced fingers in the Z-direction by being moveably mounted to a carriage 908 via a first rail 910. The carriage 908 is itself moveable in the X-direction, thereby moving the lifting mechanism 904 in that direction, by being moveable mounted on second rails 812. In this example, the second rails 912 are mounted to a gantry 914, such that the carriage 908 hangs from the gantry 914. In a goods handling station, the gantry 914 overhangs the transfer position such that the second rails 912 generally extend between the transfer position and the first goods manipulator to allow the platform to be used to carry goods therebetween.

Drive mechanisms for moving the lifting mechanism 904 along the first rail 910 and for moving the carriage 908 along the second rails 912 are not shown, but can include any suitable mechanism such as a pulley or belt mechanism, or direct drive motors, or the like.

### Storage bin

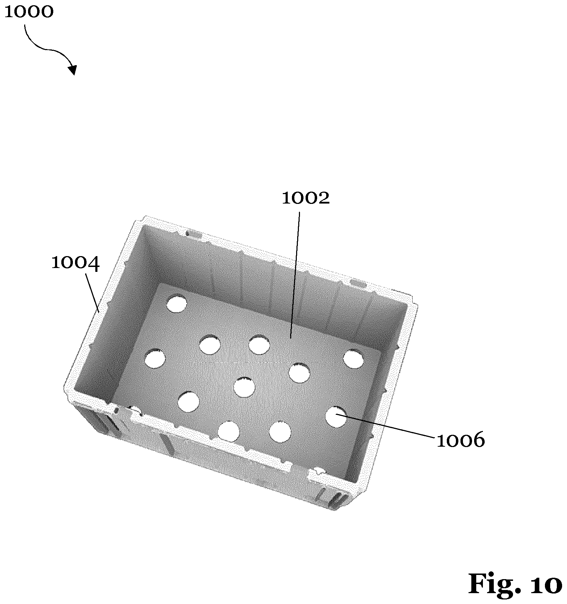

Fig. 10 is a perspective view of a bin 1000 of an automated storage and retrieval system (e.g., a system as described above with respect to Fig. 1), the bin 1000 being suitable for use with a goods handling station as described herein.

The bin 1000 comprises a base 1002 for receiving goods thereupon. An upstanding sidewall 1004 extends circumferentially about the periphery of the base 1002, and is unitary with the base 1002. The bin 1000 also comprises a plurality of apertures 1006 through the base 1002, wherein each aperture 1006 is configured to receive an upstanding support element of a first goods manipulator therethrough. In this way, when the bin 1000 is lowered relative to the support elements (e.g., by being placed on a bin support which is lowered relative to the support elements, or where the support elements are raised relative to the bin support), the support elements extend through the apertures 1006 to directly support goods present in the bin 1000 and remove or unload them from the bin 1000 by lifting them.

In this example, each aperture 1006 is circular, corresponding with a cylindrical support element. However, it will be appreciated that the apertures 1006 may have any suitable shape, depending on the cross-sectional shape of the support element. Similarly, the number and placement of the apertures 1006 is chosen to correspond with the arrangement of support elements of a first goods manipulator.

The apertures 1006 also provide an additional ingress point for water in the event of a fire.

### Method of transferring goods

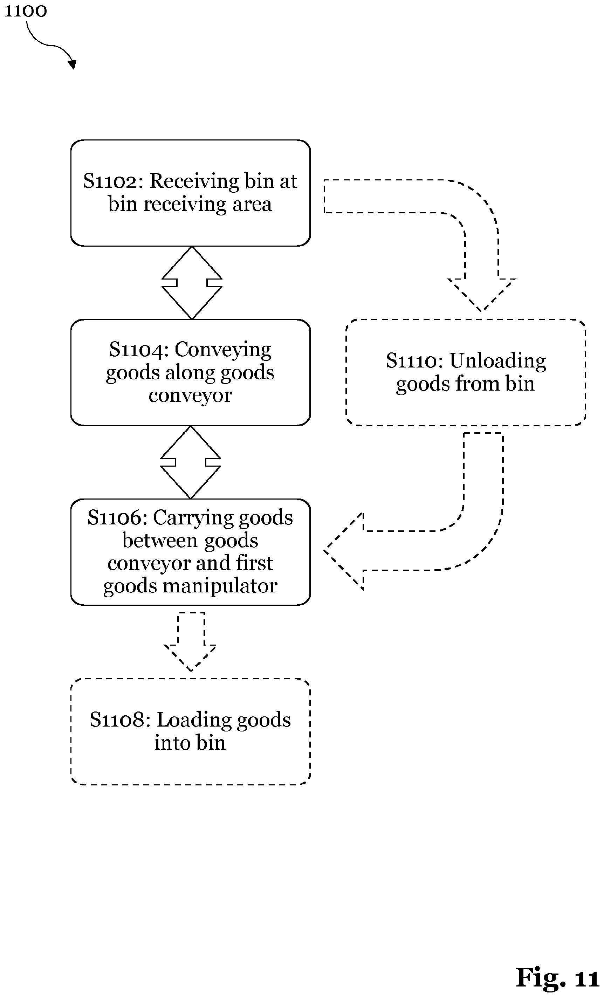

A method 1100 of transferring goods to and/or from a bin of an automated storage and retrieval system (e.g., as described above with respect to Fig. 1) using a goods handling station as described herein (e.g., with respect to Figs. 5-8) will now be described by reference to the flowchart shown in Fig. 11. The method may be carried out by a processing system, such as the processing system 400 shown in Fig. 4, for example. The method 1100 may be modified depending on whether the system is performing a loading operation involving placing goods into a bin (e.g., for stocking or restocking) or an unloading operation involving removing goods from a bin (e.g., for order picking). Steps of the method 1100 may be performed in any suitable order.

At step S1102, the method 1100 comprises receiving, a bin receiving area, a bin of the automated storage and retrieval system. This step may include receiving a bin containing goods, or receiving an empty bin. The bin may be received from a port or through a port column of the automated storage and retrieval system (e.g., receive from a container-handling vehicle of the system). Alternatively the bin may be received from the grid in order to load or unload goods without the bin leaving the automated storage and retrieval system.

At step S1104, the method 1100 comprises conveying, by a goods conveyor, goods towards or away from the transfer position in a conveying direction. For example, goods may be conveyed towards the transfer position in a loading operation, and may be conveyed away from the transfer position in an unloading operation.

At step s1106, the method 1100 comprises carrying, by a second goods manipulator, goods between the goods conveyor and a first goods manipulator. For example, goods may be carried from the goods conveyor to the first goods manipulator in a loading operation, and may be carried from the first goods manipulator to the goods conveyor in an unloading operation.

At step s1108, the method 1100 comprises loading, by the first goods manipulator, goods into the bin. This step may only be performed in a loading operation, for example, and may comprise carrying, by the second goods manipulator, goods from the goods conveyor to the first goods manipulator subsequent to the conveying of the goods to the transfer position by the goods conveyor.

At step 1110, the method comprises unloading, by the first goods manipulator, goods from the bin. This step may only be performed in an unloading operation, for example, and may comprise carrying, by the second goods manipulator, goods from the first goods manipulator to the goods conveyor prior to the conveying of the goods away from the transfer position by the goods conveyor.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A goods handling station for transferring goods to and/or from a bin of an automated storage and retrieval system, the goods handling station comprising:
a bin receiving area configured to receive a bin of the automated storage and retrieval system;
a first goods manipulator at the bin receiving area for directly supporting and unloading goods from the bin and/or loading goods into the bin;
a goods conveyor comprising a transfer position arranged adjacent to the bin receiving area, the goods conveyor configured to move goods in a conveying direction towards or away from the transfer position; and
a second goods manipulator configured to carry goods between the transfer position of the goods conveyor and the first goods manipulator.

2. The goods handling station of any preceding claim, wherein the second goods manipulator comprises:
a plurality of laterally spaced fingers for carrying goods; and
a positioning mechanism for moving the plurality of laterally spaced fingers between the transfer position of the goods conveyor and the first goods manipulator.

3. The goods handling station of claim 2, wherein each of the laterally spaced fingers comprises:
a support portion for carrying goods; and
a connecting portion for connecting the finger to the positioning mechanism,
wherein the support portion is connected at an angle to the connecting portion.

4. The goods handling station of claim 2 or claim 3, wherein the positioning mechanism comprises:
a lifting mechanism for moving the platform along a first direction; and
a carriage for moving the lifting mechanism along a second direction, the second direction being perpendicular to the first direction.

5. The goods handling station of any one of claims 2 to 4, wherein the first goods manipulator comprises a plurality of upstanding support elements arranged to protrude into the bin at the bin receiving area and directly support goods thereon, and
wherein the support elements are arranged so as to interpose the laterally spaced fingers of the second goods manipulator when the platform is positioned at the first goods manipulator.

6. The goods handling station of claim 5, wherein the plurality of upstanding support elements are arranged in an array, wherein the array of upstanding support elements is configured to be substantially coextensive with a bin of the automated storage and retrieval system.

7. The goods handling station of claim 5 or claim 6, wherein the first goods manipulator further comprises a bin support configured to receive a bin of the automated storage and retrieval system, the bin support being moveable relative to the upstanding support elements.

8. The goods handling station of claim 7, wherein the bin support is moveable between a raised position and a lowered positioned, wherein in the lowered position upper ends of the elongate support elements are higher than a sidewall of the bin.

9. The gods handling station of any one of claims 2 to 8 wherein the goods conveyor comprises a plurality of rollers at the transfer position, and
wherein the plurality of rollers are arranged to interpose the laterally spaced fingers of the second goods manipulator when the platform is positioned at the transfer position.

10. A bin of an automated storage and retrieval system, the bin suitable for use with a goods handling station according to any one of the preceding claims, wherein the bin comprises:
a base for receiving goods thereupon;
an upstanding sidewall about the periphery of the base; and
a plurality of apertures through the base, each aperture configured to receive an upstanding support element of a first goods manipulator therethrough.

11. A method of transferring goods to and/or from a bin of an automated storage and retrieval system using a goods handling station according to any one of claims 1 to 9, the method comprising:
receiving, at the bin receiving area, a bin of the automated storage and retrieval system;
conveying, by the goods conveyor, goods towards or away from the transfer position in a conveying direction;
carrying, by the second goods manipulator, goods between the goods conveyor and the first goods manipulator; and, either:
unloading, by the first goods manipulator, goods from the bin; or
loading, by the first goods manipulator, goods into the bin.

12. The method of claim 11, wherein the carrying, by the second goods manipulator, goods between the first goods conveyor and the first goods manipulator comprises carrying, by the second goods manipulator, goods from the goods conveyor to the first goods manipulator subsequent to the conveying of the goods to the transfer position by the goods conveyor.

13. The method of claim 11, wherein the carrying, by the second goods manipulator, goods between the first goods conveyor and the first goods manipulator comprises carrying, by the second goods manipulator, goods from the first goods manipulator to the goods conveyor prior to the conveying of the goods away from the transfer position by the goods conveyor.

14. The method of any one of claims 11 to 13, wherein receiving, at the bin receiving area, a bin of the automated storage and retrieval system comprises receiving the bin from a container-handling vehicle of an automated storage and retrieval system.

15. A computer-readable medium comprising instructions which, when executed by a processor of an item handling device, cause the device to perform the method of any of claims 11 to 14.
